# DEMANDE DE BREVET EUROPEEN

(11) **EP 0 903 194 A1**
(43) Date de publication de la demande: **24.03.1999**
(21) Numéro de dépôt: 98402200.4
(22) Date de dépôt: 07.09.1998
(51) Int. Cl.: B23B 31/18

(54) **Dispositif de serrage**

(30) Priorité: 09.09.1997 FR 9711156
(71) Demandeur: SANDVIK TOBLER S.A., F-95380 Louvres (FR)
(72) Inventeur: Barbieux, Jacques, 95380 Louvres (FR)
(74) Mandataire: Lhuillier, René

(57) **Abrégé**

Le serrage est assuré par au moins deux bras pivotants dont une extrémité coopère avec une demi-tirette (10a, 10b) par une liaison à bille tronquée (18) et pan incliné (19). La tirette est montée coaxialement à l'extérieur d'une bague de verrouillage (9) déplaçable sous l'action d'une tige de traction (5). Le système de transmission entre la bague et la tirette dispose de moyens de compensation et de blocage constitués d'un guide (11), d'un disque compensateur (13) et d'une cale (14) coopérant avec une face oblique du disque compensateur.

Application au serrage de pièces prépositionnées.

## Description

Le système de serrage et d'entraînement d'une pièce selon l'invention, concerne plus précisément une pièce prépositionnée notamment sur un mandrin ou centreur expansible, ledit système n'affectant pas la position initiale de la pièce par rapport à son support.

On connaît un certain nombre de dispositifs de serrage de pièces, par exemple des mandrins à serrage radial et axial, mais sans serrage compensé, ou encore des mandrins à un ou plusieurs mors concentriques ou compensés en diamètre, à serrage radial avec ou sans serrage axial, à répartition modifiable entre le serrage radial et le serrage axial avec compensation desdits serrage et répartition de l'effort de serrage à peu près égale sur chaque mors, comme décrit dans le FR-A 2373 351.

Plus récemment on a apporté des modifications à ces systèmes en réalisant un mandrin de serrage permettant un guidage radial précis des porte-mors dans le corps du mandrin, qui assure aussi une liberté de pivotement axial de ceux-ci en vue d'un positionnement optimal des mors au contact de la pièce à serrer. Pour cela chaque porte mors est équipé d'un élément guidé le long d'une rainure ménagée au sein du mandrin, ledit élément de guidage étant uniquement libre de pivoter axialement par rapport au porte-mors, comme décrit dans le FR 94 06 935 au nom de la demanderesse.

Mais il est des cas où ces dispositifs peuvent ne pas être tout à fait appropriés, comme par exemple pour une pièce qui serait prépositionnée sur un centreur expansible, et que l'on souhaiterait pouvoir serrer sans pour autant modifier ce prépositionnement. Il convient parfois, en effet, quand il s'agit par exemple d'une pièce creuse filetée intérieurement, dont le filetage est appliqué sur un support de centrage, de ne pas exercer sur cette pièce, lors de son serrage, son déplacement par rapport au support qui pourrait être préjudiciable à ladite pièce, par exemple en émoussant ou détériorant son filetage.

L'invention apporte une solution à ce problème en combinant dans le même outil un système de compensation et un élément de serrage flottant à au moins deux bras.

L'invention a donc pour objet un dispositif de serrage et d'entraînement d'une pièce prépositionnée sur un centreur, le dispositif comportant un corps principal, une tige de traction coulissant axialement dans ledit corps, qui par un système de transmission transforme son déplacement axial en un déplacement radial des éléments assurant le serrage de la pièce, le dispositif étant caractérisé en ce que le serrage est assuré par au moins deux bras pivotant dont une extrémité coopère avec une demi-tirette par une liaison à bille tronquée et pan incliné, chaque demi-tirette étant montée coaxialement à l'extérieur d'une bague de verrouillage déplaçable sous l'action de la tige de traction, et le système de transmission entre la bague et la tirette disposant de moyens de compensation et de blocage.

Selon une caractéristique particulière de l'invention, les moyens de compensation et de blocage sont constitués, d'un guide coaxial à la tige de traction et logé à l'intérieur de la bague de verrouillage, d'un disque compensateur en appui contre le guide, et d'une cale coopérant avec une face oblique du disque compensateur, en butée contre un rebord interne de la demi-tirette.

Selon une autre caractéristique particulière de l'invention, chaque demi-tirette porte une aile latérale percée d'une fenêtre dont la bordure forme le plan incliné sur lequel vient en appui la face plane de la bille tronquée, pour épouser le contour de la bille.

D'autres caractéristiques et avantages de l'invention ressortiront de la description qui va suivre d'un exemple de réalisation dans lequel il est fait référence aux dessins annexés qui représentent :

Figure 1 une vue générale en élévation du corps principal du dispositif de serrage.

Figure 2 une vue en coupe verticale du corps principal.

Figure 3 une vue en coupe partielle selon III-III de la figure 2.

Figures 4 à 6 des vues schématiques montrant les phases principales de positionnement et de serrage de la pièce par les mâchoires des bras pivotants.

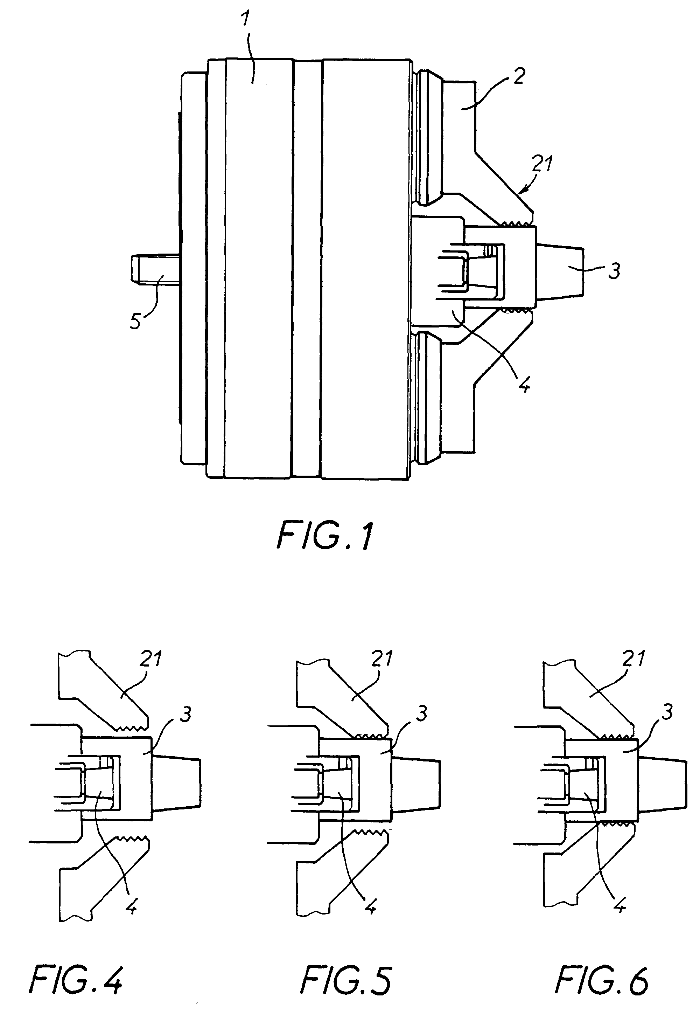

On voit sur la figure 1 le support cylindrique 1, ou corps principal équipé de deux bras de serrage dont les mâchoires 21 sont destinées à serrer une pièce 3, en l'occurrence une pièce cylindrique creuse pourvue d'un filetage interne, qui vient coiffer un centreur expansible 4 sur lequel elle est prépositionnée, ledit centreur expansible étant monté sur l'axe du support ; une tige de traction 5 est visible de l'autre côté.

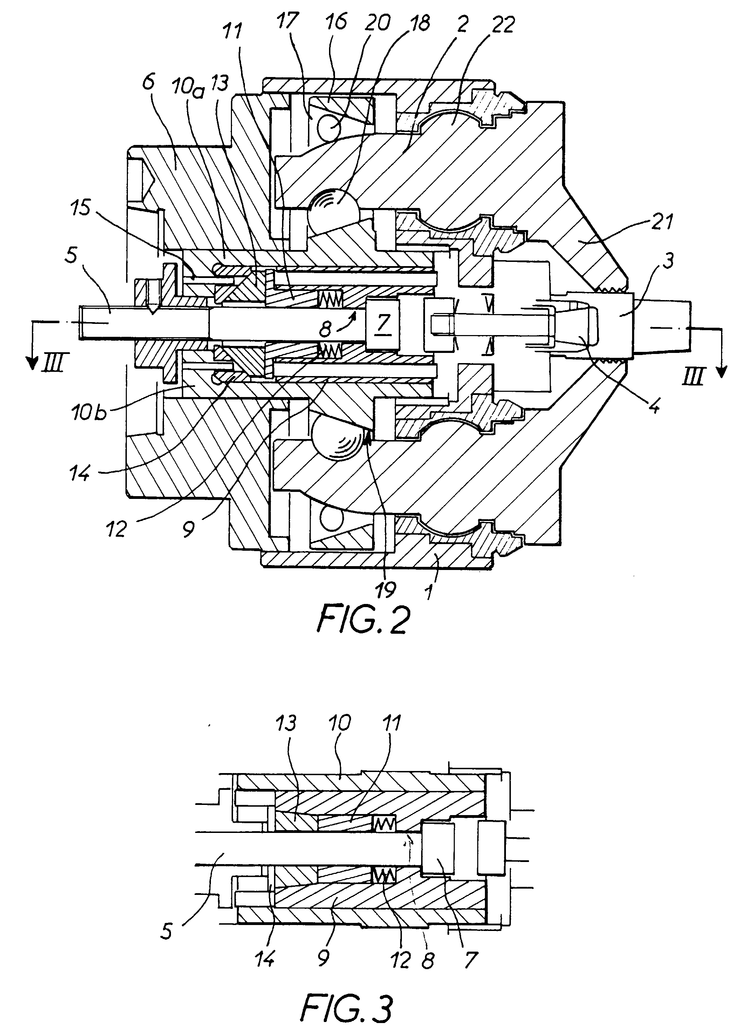

On voit plus précisément aux figures 2 et 3 comment est réalisé le système de serrage et d'entraînement de la pièce 3.

A l'arrière du corps principal 1 est fixé un plateau 6 dans lequel la tige de traction 5 est à même de coulisser axialement. La tige se termine par une butée 7 en appui sur un épaulement interne 8 d'une bague de verrouillage cylindrique 9 elle-même déplaçable axialement à l'intérieur de deux demi-tirettes cylindriques 10a et 10b. Un guide 11, coaxial à la tige de traction 5 est logé à l'intérieur de la bague 9, et un ressort circulaire 12 est intercalé entre le guide et l'épaulement 8 de la bague. Un disque compensateur 13 est en appui contre le guide 11 et, du côté opposé , sa face oblique coopère avec une cale 14 en butée contre un rebord interne d'une demi-tirette 10a, 10b. Des goupilles 15 solidarisent la cale et la demi-tirette.

Chaque demi-tirette 10a, 10b, coulissante axialement à l'intérieur du corps principal 1, porte une aile latérale 16 opposée à celle de l'autre demi-tirette, chacune percée d'une fenêtre 17 dont la bordure est inclinée, ladite fenêtre étant traversée par le bras pivotant de serrage 2. La partie inférieure de ce dernier est profilée pour épouser le contour d'une bille tronquée 18 dont la face plane est en appui sur le pan incliné 19 formé par la bordure de la fenêtre 17. La partie supérieure du bras de serrage forme un arrondi en appui sur un axe 20 transversal à l'ouverture de la fenêtre. Le bras 2 est ainsi maintenu entre la bille 18 et cet axe, et il est apte à pivoter à l'intérieur du corps principal grâce aux rotules 22 dont il est équipé, en arrière des mâchoires de serrage 21.

Les séquences de positionnement et de serrage sont illustrées aux figures 4 à 6.

La figure 4 montre la pièce 3 prépositionnée sur le centreur 4, les mâchoires 21 étant écartées.

Quand on exerce une traction sur la tige 5 (vers la gauche sur les figures 2 et 3) , sa butée 7, par l'intermédiaire de l'épaulement 8, tend à déplacer la bague de verrouillage 9 à l'encontre du ressort 12 agissant sur le guide 11, puis le disque compensateur 13, la cale 14 et enfin la demi-tirette 10a, 10b. Le déplacement indépendant de chacune des demi-tirettes 10a, 10b vers la gauche se répercute sur les pans inclinés 19, et les billes 18 font basculer les bras 2 qui pivotent sur leurs rotules 22 pour positionner les mâchoires 21 sur la pièce 3.

On voit à la figure 5 que du fait d'un prépositionnement non parfaitement centré de la pièce sur le centreur 4, l'une des mâchoires est venue au contact de la pièce avant l'autre. Lors de cette phase, l'effort de serrage est faible pour ne pas déplacer la pièce prépositionnée. Du fait des pans inclinés du disque compensateur 13 et de son profil extérieur biseauté visible à la figure 3, le disque a pénétré à l'intérieur de la bague 9 dans laquelle il s'est verrouillé radialement. On a ainsi un serrage compensé à blocage en position.

Le système de compensation étant ainsi bloqué, on peut assurer le serrage définitif des mâchoires 21 sur la pièce 3, comme le montre la figure 6, en poursuivant l'action sur la tige de traction, le serrage étant assuré avec une course et une force identique.

## Revendications

1. Dispositif de serrage et d'entraînement d'une tige prépositionnée sur un centreur, le dispositif comportant un corps principal, une tige de traction, coulissant axialement dans ledit corps, qui par un système de transmission transforme son déplacement axial en un déplacement radial des éléments assurant le serrage de la pièce qui est assuré par au moins deux bras pivotant et une liaison à bille tronquée et pan incliné caractérisé en ce que l'extrémité de chaque bras pivotant (2) coopère avec une demi-tirette (10a, 10b) par la liaison à bille tronquée (18), en ce que chaque demi-tirette est montée coaxialement à l'extérieur d'une bague de verrouillage (9) déplaçable sous l'action de la tige de traction (5), et en ce que le système de transmission entre la bague et la tirette dispose de moyens de compensation et de blocage (11, 13, 14).

2. Dispositif de serrage et d'entraînement selon la revendication 1, caractérisé en ce que les moyens de compensation et de blocage sont constitués, d'un guide (11) coaxial à la tige de traction (5) et logé à l'intérieur de la bague de verrouillage (9), d'un disque compensateur (13) en appui contre le guide, et d'une cale (14) coopérant avec une face oblique du disque compensateur, en butée contre un rebord interne de la demi-tirette (10a, 10b).

3. Dispositif de serrage et d'entraînement selon les revendications 1 et 2, caractérisé en ce que un ressort (12) est intercalé entre le guide (11) et un épaulement (8) de la bague de verrouillage (9).

4. Dispositif de serrage et d'entraînement selon la revendication 1, caractérisé en ce que chaque demi-tirette (10a, 10b) porte une aile latérale (16) percée d'une fenêtre (17) dont la bordure forme le pan incliné (19).
